# DEMANDE DE BREVET EUROPEEN

(11) **EP 2 218 933 A1**
(43) Date de publication de la demande: **18.08.2010**
(21) Numéro de dépôt: 10151888.4
(22) Date de dépôt: 28.01.2010
(51) Int. Cl.: F16D 65/097

(54) **Dispositif de freinage à disque à atténuation du couple résiduel**

(30) Priorité: 06.02.2009 FR 0950765
(71) Demandeur: Peugeot Citroën Automobiles SA, 78140 Vélizy-Villacoublay (FR)
(72) Inventeur: Michel, Alain, 95500, Gonesse (FR)

(57) **Abrégé**

Un dispositif de freinage de type frein à disque, comportant un étrier (2) dans lequel au moins une plaquette de frein (3,4) est montée mobile en translation de façon à pouvoir être serrée contre la surface de freinage d'un disque rotatif (1), comportant des moyens de rappel interposés entre l'étrier (2) et la plaquette de frein (3,4), et tendant à éloigner la plaquette de frein (3,4) du disque (1).

## Description

La présente invention concerne un dispositif de freinage à disque, notamment mis en oeuvre dans un véhicule automobile.

Les dispositifs de freinage à disque, ou freins à disque, mis en oeuvre sur les véhicules automobiles, présentent généralement des disques dont la rotation est associée à celle des roues du véhicule et des éléments de friction, par exemple des plaquettes de frein, qui sont appliqués sur les disques lors du freinage pour ralentir la rotation de ceux-ci.

Pour exercer le freinage, un dispositif de vérin hydraulique est généralement prévu, actionnant un piston lié aux plaquettes de frein. Ce piston vient serrer les plaquettes contre le disque sous l'action du liquide de frein envoyé dans le vérin quand une commande de freinage est actionnée. Au contraire, quand aucune commande de freinage n'est actionnée, aucune force ne vient serrer les plaquettes de frein contre le disque qui peut alors tourner librement.

Les plaquettes de frein, après un freinage, restent cependant à proximité immédiate du disque de frein. Il arrive également couramment que ces plaquettes, bien que n'étant plus serrées contre le disque, restent en contact avec celui-ci. Un tel contact peut également se produire avec certains points du disque uniquement, notamment si la surface de celui-ci n'est pas parfaitement régulière.

Ce contact entre le disque et les plaquettes, couramment appelé léchage du disque par les plaquettes, n'entraîne pas d'inconvénient important pour la conduite du véhicule. En effet, la force de freinage résiduelle, ou couple résiduel, générée par ce contact est négligeable par rapport aux capacités d'accélération du véhicule.

Cependant, cette force de freinage résiduelle n'est pas souhaitable. En effet, même si le conducteur ne ressent pas le freinage résiduel de façon sensible, celui-ci génère une consommation supplémentaire de carburant, et une diminution des performances du véhicule. De plus, ce léchage du disque par les plaquettes de frein peut générer un bruit désagréable pour les occupants du véhicule, qui peut être interprété à tort comme un bruit caractéristique d'une défaillance mécanique du véhicule.

La présente invention a pour objectif de pallier à ces inconvénients de l'art antérieur.

Plus particulièrement, l'invention a pour objectif d'améliorer le fonctionnement des systèmes de freinage à disque en diminuant les frottements inutiles.

L'invention à également pour objectif de fournir un système de freinage à disque permettant d'améliorer les performances du véhicule, et d'éviter la génération de bruits dans celui-ci.

Ces objectifs, ainsi que d'autres qui apparaitront plus clairement par la suite, sont atteints par un dispositif de freinage de type frein à disque, comportant un étrier dans lequel au moins une plaquette de frein est montée mobile en translation de façon à pouvoir être serrée contre la surface de freinage d'un disque rotatif, qui comporte, selon l'invention, des moyens de rappel interposés entre l'étrier et la plaquette de frein, et tendant à éloigner la plaquette de frein du disque.

Selon un mode de réalisation préférentiel de l'invention, les moyens de rappel sont constitués par au moins un ressort qui est comprimé quand la plaquette est serrée sur le disque.

Avantageusement, le dispositif de freinage comprend deux ressorts agissant sur chaque plaquettes de frein, placés chacun à une extrémité opposée de la plaquette de frein correspondante.

De préférence, chaque plaquette de frein comporte une plaque de support et une garniture de freinage, et les deux ressorts sont en appui entre l'étrier et les deux extrémités opposées de la plaque de support.

De façon préférentielle, chaque ressort fait partie d'une pièce rapportée dans l'étrier.

Avantageusement, la pièce rapportée est conformée pour être fixée dans l'étrier par clippage, ou par emboitement.

Selon un mode de réalisation avantageux, la pièce rapportée est conformée pour participer au guidage en translation de la plaquette de frein correspondante.

Préférentiellement, chaque ressort est constitué par une lame ressort pliée en V.

Avantageusement, l'étrier porte au moins un piston d'actionnement de la plaquette de frein contre le disque.

De préférence, l'étrier porte deux plaquettes de frein montées de part et d'autre du disque, et des moyens de rappel interposés entre l'étrier et chaque plaquette de frein, et tendant à l'éloigner du disque.

L'invention concerne également un véhicule équipé d'au moins un dispositif de freinage tel que décrit ci dessus.

D'autres buts, avantages et caractéristiques de l'invention apparaîtront dans la description qui suit d'un mode de réalisation préféré, non limitatif de l'objet et de la portée de la présente demande de brevet, accompagnée de dessins dans lesquels :
- la figure 1 est une vue de coupe d'un système de freinage à disque, dans lequel les plaquettes de frein sont serrées sur le disque de frein ;
- la figure 2 est une vue de coupe d'un système de freinage à disque dont les plaquettes de frein ne sont pas serrées sur le disque de frein ;
- la figure 3 est une vue de détail en coupe du système de freinage à disque tel que représenté par la figure 2 ;
- la figure 4 est une vue en perspective d'une pièce comprenant un ressort utilisé dans le système de freinage à disque des figures 1 à 3.

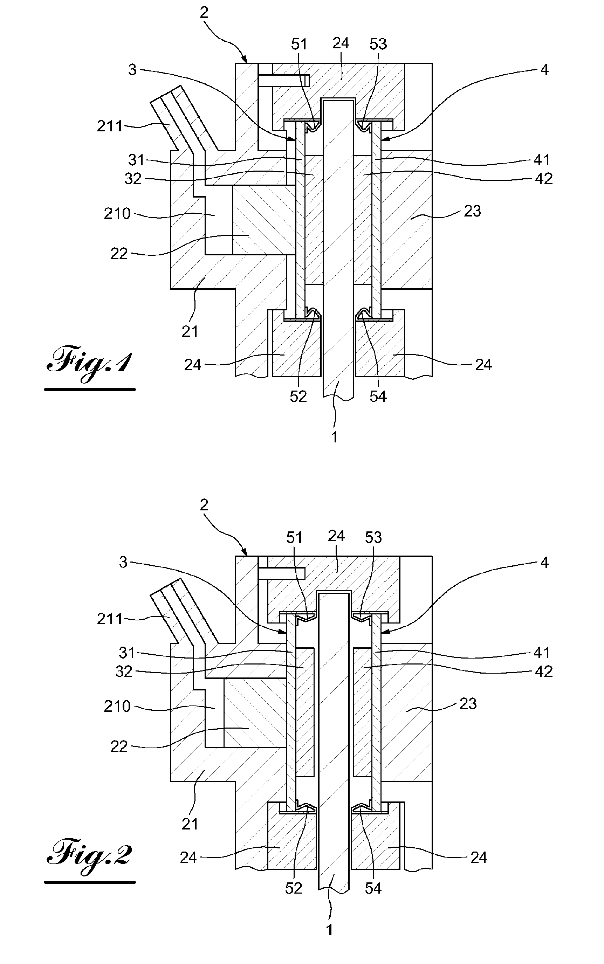

Les figures 1 et 2 montrent un dispositif de freinage à disque suivant un mode de réalisation de l'invention en vue de coupe selon un plan perpendiculaire au disque de frein. On peut voir sur ces figures le disque de frein 1 et l'étrier 2 portant les plaquettes de frein 3 et 4. L'étrier 2 comporte un boîtier mobile 21 et un support fixe 24. Le boitier mobile 21 est monté coulissant par rapport au support fixe 24, selon un axe perpendiculaire au plan du disque 1.

Un piston 22 est monté coulissant dans une chambre 210 du boîtier 21 de façon à former avec celui-ci un vérin. Ce vérin est actionné par du liquide de frein introduit dans la chambre 210 par un tuyau 211. Le boitier mobile 21 présente également un élément d'appui externe 23. Quand l'étrier 2 est en place sur le disque de frein 1, le piston 22 est situé en regard de l'élément d'appui externe 23, chacun étant situé d'un côté du disque 1.

Une plaquette de frein, dite plaquette interne 3, est placée entre le piston 22 et le disque 1. Une autre plaquette de frein, dite plaquette externe 4, est placée entre le disque 1 et l'élément d'appui externe 23. Ces deux plaquettes de frein 3 et 4 s'étendent parallèlement au disque 1, et sont montées mobiles en translation sur le support fixe 24 de l'étrier 2 selon un axe perpendiculaire au plan défini par le disque 1.

Chacune de ces plaquettes de frein 3, 4, est constituée d'une plaque de support, respectivement 31, 41, à laquelle est assemblée une garniture de freinage, respectivement 32, 42, destinée à être en contact avec le disque de frein.

Lorsqu'un freinage est exercé, comme le représente la figure 1, le vérin formé par la chambre 210 du boîtier 21 et le piston 22 est actionné par le liquide de freinage. Le piston 22 coulisse alors par rapport au boitier mobile 21 en se rapprochant du disque 1, et pousse la plaquette de frein interne 3 contre le disque
1. De plus, cette action du vérin entraîne le déplacement du boitier mobile 21 par rapport au support fixe 24, suivant une direction perpendiculaire au plan défini par le disque 1, de sorte que la portion d'appui externe 23 du boitier mobile 21 se rapproche également du disque 1, en poussant la plaquette de frein externe 4 contre le disque 1. Le disque 1, dont la rotation est associée à celle des roues du véhicule, est alors serré entre les garnitures de freinage des deux plaquettes de frein 3 et 4, situées en regard l'une de l'autre sur chacune des faces du disque. Ce serrage engendre un frottement ayant pour conséquence le freinage de la rotation du disque 1.

Quand aucun freinage n'est exercé, comme le représente la figure 2, la pression du liquide de frein dans la chambre 210 est relâchée. Le piston 22 n'exerce plus d'effort de serrage des plaquettes de frein 3 et 4 contre le disque 1. Pour éviter que les plaquettes de frein 3 et 4 ne restent en contact contre le disque 1 et engendrent alors des frottements résiduels, il est prévu selon l'invention de mettre en oeuvre des ressorts tendant à écarter les plaquettes de frein 3 et 4 du disque 1. Les figures 1 et 2 montrent ainsi deux ressorts 51 et 52 portés par le support fixe 24 de l'étrier 2 au niveau de deux extrémités de la plaquette de frein interne 3 et deux ressorts 53 et 54 portés par le support fixe 24 de l'étrier 2 au niveau de deux extrémités de la plaquette de frein externe 4.

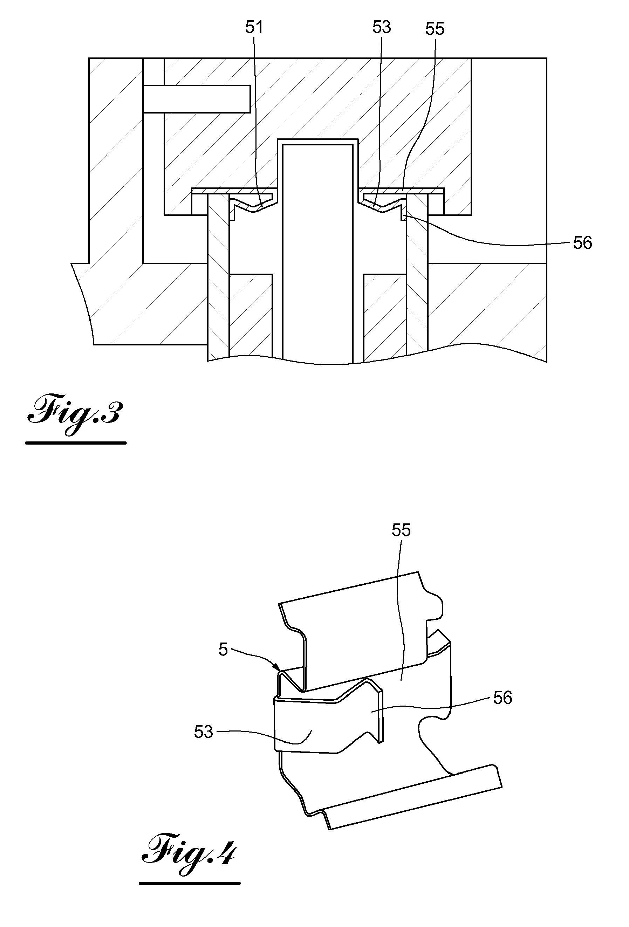

La figure 3 est une vue de détail du dispositif de freinage des figures 1 et 2, quand aucune force de freinage n'est exercée, montrant notamment les ressorts 51 et 53. La figure 4 représente en vue de perspective la pièce 5 comportant le ressort 53, indépendamment des autres éléments du système de freinage. Comme le montrent ces figures, cette pièce 5 présente une portion de liaison 55 solidarisée à l'étrier 2, une portion déformable constituant le ressort 53 constituée par une lame ressort pliée en forme de V, et une portion d'appui 56 destinée à être en contact contre la surface tournée vers le disque de la plaque de support de la plaquette de frein. Le deux branches du V formé par la lame ressort peuvent se rapprocher élastiquement l'une de l'autre, lorsque le ressort 53 est comprimé.

Comme le montre la figure 4, la portion de liaison 55 de cette pièce 5 peut avoir une forme complexe, permettant notamment au ressort d'être fixé par clippage, ou par emboitement, au support fixe 24 de l'étrier 2 et, éventuellement, de participer au guidage en translation de l'extrémité de la plaque de support de la plaquette de frein par rapport au support fixe 24 l'étrier 2.

Quand, comme le montre la figure 1, un freinage est exercé et que les plaquettes 2 et 3 sont serrées contre le disque 1, les ressorts 51, 52, 53 et 54 sont comprimés sous l'effet de l'action du vérin formé par le piston 22 et la chambre 210. Il est à noter que le coefficient de raideur des ressorts utilisés est choisi de façon à ce que l'action de ces ressorts soit négligeable par rapport à l'action du vérin. En revanche, quand la pression du liquide de frein dans la chambre 210 est relâchée, les ressorts 51, 52, 53 et 54 repoussent les plaquettes de frein jusqu'à la position représentée par la figure 2 dans laquelle ces plaquettes ne sont pas en contact avec le disque 1. Les frottements entre ces plaquettes 3 et 4 et le disque 1 sont donc évités, ce qui supprime, ou à tout le moins atténue, le couple résiduel généré par le dispositif de freinage à disque.

Il est à noter que l'invention peut être mise en oeuvre sans difficulté par l'homme du métier sur des freins à disque d'un type différent de celui représenté par les figures, comme par exemple sur un dispositif de freinage à disque présentant plusieurs pistons.

## Revendications

1. Dispositif de freinage de type frein à disque, comportant un étrier (2) dans lequel au moins une plaquette de frein (3, 4) est montée mobile en translation de façon à pouvoir être serrée contre la surface de freinage d'un disque rotatif (1),
**caractérisé en ce qu'**il comporte des moyens de rappel interposés entre l'étrier (2) et la plaquette de frein (3, 4), et tendant à éloigner la plaquette de frein (3, 4) du disque (1), lesdits moyens de rappel sont constitués par au moins deux ressorts (51, 52, 53, 54) agissant sur chaque plaquettes de frein (3, 4), placés chacun à une extrémité opposée de la plaquette de frein (3, 4) correspondante, lesdits ressorts (51, 52, 53, 54) étant comprimés quand la plaquette de frein (3, 4) est serrée sur le disque (1).

2. Dispositif de freinage selon la revendication 1, **caractérisé en ce que** chaque plaquette de frein (3, 4) comporte une plaque de support (31, 41) et une garniture de freinage (32, 42), et **en ce que** les deux ressorts (51, 52, 53, 54) sont en appui entre l'étrier (2) et les deux extrémités opposées de la plaque de support (31, 41).

3. Dispositif de freinage selon l'une quelconque des revendications 1 à 2, **caractérisé en ce que** chaque ressort (51, 52, 53, 54) fait partie d'une pièce (5) rapportée dans l'étrier (2).

4. Dispositif de freinage selon la revendication 3, **caractérisé en ce** la pièce rapportée (5) est conformée pour être fixée dans l'étrier (2) par clippage.

5. Dispositif de freinage selon la revendication 4, **caractérisé en ce que** la pièce rapportée (5) est conformée pour participer au guidage en translation de la plaquette de frein (3, 4) correspondante.

6. Dispositif de freinage selon l'une quelconque des revendications précédentes, **caractérisé en ce que** chaque ressort (51, 52, 53, 54) est constitué par une lame ressort pliée en V.

7. Dispositif de freinage selon l'une quelconque des revendications 3 à 6, **caractérisé en ce que** l'étrier (2) porte au moins un piston (22) d'actionnement de la plaquette de frein (3, 4) contre le disque.

8. Dispositif de freinage selon l'une quelconque des revendications précédentes, **caractérisé en ce que** l'étrier (2) porte deux plaquettes de frein (3, 4) montées de part et d'autre du disque(1), et des moyens de rappel interposés entre l'étrier (2) et chaque plaquette de frein (3, 4), et tendant à l'éloigner du disque (1).

9. Véhicule équipé d'au moins un dispositif de freinage selon l'une quelconque des revendications 1 à 8.
